# EUROPEAN PATENT APPLICATION

(11) **EP 4 628 314 A1**
(43) Date of publication of application: **08.10.2025**
(21) Application number: 25167734.0
(22) Date of filing: 01.04.2025
(51) Int. Cl.: B41M 1/30, B41M 1/32, A47C 27/08, A63H 3/06, B32B 27/12, B41M 5/52, D06N 3/00, B41M 1/10, B41M 1/12, B41M 5/00, B41M 5/50

(54) **SHEET, SHEET PRINTING METHOD, SHEET PRINTING DEVICE AND INFLATABLE PRODUCT**

(30) Priority: 02.04.2024 CN 202410398951
(71) Applicant: Bestway Inflatables & Material Corp., Shanghai 201812 (CN)
(72) Inventor: SONG, Qingshui, SHANGHAI - NO. 208 JINYUANWU ROAD, 201812 (CN); HE, Liang, RUGAO, JIANGSU - NO. 8 HUIMIN WEST ROAD, 226503 (CN)
(74) Representative: Grassi, Stefano

(57) **Abstract**

A sheet (100), a sheet printing method, a sheet printing device and an inflatable product are disclosed. The sheet (100) includes a fabric layer (111), a printing stock layer (113) and an ink layer (130, 150). The fabric layer (111) includes a first side and a second side, the printing stock layer (113) includes a first polymer compound and is formed on the first side of the fabric layer (111), and the ink layer (130, 150) covers at least a portion of the printing stock layer (113). A pigment on the sheet (100) will not permeate or transfer from the fabric to other items that are in contact with the fabric.

## Description

### TECHNICAL FIELD

The present disclosure relates to a sheet, and, more particularly, to a method and device for printing patterns on the sheet and to an inflatable product comprising the sheet.

### BACKGROUND

Fabric printing processes (e.g., a polyester fabric) using ink are commonly used in a variety of applications. However, fabric printed with traditional printing processes may suffer from color migration, which may occur when the printed fabric is placed in contact with other items (e.g., plastic products or other fabrics). For example, color migration may occur when a pigment from the fabric is transferred to other items, such that the other items become stained while the fabric fades, thereby negatively impacting the appearance of the related products.

Furthermore, when a fabric attached to a surface of a plastic film is printed with a pattern, a pigment may be transferred to the plastic film, such that the plastic film is stained and the fabric itself fades. Moreover, in common fabric printing techniques, a pattern may initially be printed on other materials (e.g. transfer paper), after which the pattern on the transfer paper may be transferred to a target fabric. However, these common printing methods may be inefficient and cause environmental pollution due to the fact that the transfer paper cannot be reused.

### SUMMARY

The present disclosure provides a sheet, a sheet printing method, and a sheet printing device, which can prevent a pigment on a fabric from migrating to other items that are in contact with the fabric.

Specifically, the present disclosure provides a sheet, the sheet including: a fabric layer, including a first side and a second side; a printing stock layer, including a first polymer compound and being formed on the first side of the fabric layer; and an ink layer, covering at least a portion of the printing stock layer.

In an embodiment, the first polymer compound includes at least one of polyurethane, rubber and acrylate.

In an embodiment, the printing stock layer has a thickness of not greater than 0.20 mm.

In an embodiment, the sheet further includes a base material layer, the base material layer including a second polymer compound and being attached to the second side of the fabric layer.

In an embodiment, the second polymer compound includes at least one of thermoplastic polyurethanes, TPU, polyvinyl chloride, PVC, polyethylene, PE, and ethylene-vinyl acetate, EVA.

In an embodiment, the fabric layer includes polyester fibers or nylon fibers.

In an embodiment, the ink layer covers at least a portion of the printing stock layer.

The present disclosure further provides a sheet printing method, the method including the following steps: providing a sheet, the sheet including a fabric layer, and the fabric layer including a first side and a second side; coating the first side of the fabric layer with a first polymer compound to form a printing stock layer; and coating the printing stock layer with ink to form an ink layer, the ink layer covering at least a portion of the printing stock layer.

In an embodiment, the first polymer compound includes at least one of polyurethane, rubber and acrylate.

In an embodiment, the step of coating the first side of the fabric layer with a first polymer compound to form a printing stock layer includes: coating the first side of the fabric layer with a first polymer compound; and removing a part of the first polymer compound from the first side of the fabric layer to form a printing stock layer having a target thickness.

In an embodiment, the method further includes a step of drying the printing stock layer.

In an embodiment, the sheet further includes a base material layer, the base material layer including a second polymer compound and being attached to the second side of the fabric layer.

In an embodiment, the step of coating the printing stock layer with ink to form an ink layer includes: coating the printing stock layer with a first ink to form a first ink layer, the first ink layer covering a first portion of the printing stock layer; and coating an exposed area of the printing stock layer with a second ink to form a second ink layer, the second ink layer covering a second portion of the printing stock layer.

The present disclosure further provides a sheet printing device, the device including: a sheet supply apparatus configured to provide a sheet to be printed with a pattern, the sheet including a fabric, and the fabric including a first side and a second side; a printing stock layer coating apparatus configured to form a printing stock layer on the first side of the fabric and including an extruding assembly for extruding a first polymer compound to the first side of the sheet; and an ink coating apparatus including an ink supply assembly and an ink transfer assembly, where the ink transfer assembly is configured to coat a surface of the printing stock layer with ink from the ink supply assembly; where the printing stock layer is formed from the first polymer compound and on the first side of the sheet.

In an embodiment, the printing stock layer coating apparatus further includes: a scraping assembly configured to remove a part of the first polymer compound from the first side of the sheet to form on the first side of the sheet a printing stock layer having a target thickness.

In an embodiment, the sheet printing device further includes a heat drying apparatus disposed upstream of the ink coating apparatus and configured to dry the printing stock layer by heating.

In an embodiment, the ink transfer assembly includes: a mesh screen including an ink-permeable area and an ink-impermeable area; and a squeegee configured to squeeze ink to penetrate the ink-permeable area to coat the surface of the printing stock layer with the ink.

In an embodiment, the ink transfer assembly includes: a gravure cylinder having an etched recess configured to store ink, the gravure cylinder facing toward the first side of the fabric; and an impression roll that presses against the sheet in a direction from the second side of the fabric to the gravure cylinder.

In an embodiment, the ink supply assembly includes an ink fountain containing ink to be coated on the surface of the printing stock layer.

The present disclosure further provides an inflatable product, the product including: at least one wall that defines an inflatable chamber and includes: a fabric layer, including a first side and a second side; a printing stock layer, including a first polymer compound and being formed on the first side of the fabric layer; and an ink layer, covering at least a portion of the printing stock layer.

In an embodiment, the at least one wall further includes a base material layer, the base material layer including a second polymer compound and being attached to the second side of the fabric layer.

In an embodiment, the inflatable product further includes: internal tensioning members disposed in the inflatable chamber and connected to the at least one wall.

Compared with the prior art, the present disclosure has the advantages that a pigment will not permeate or transfer from a fabric to other items that are in contact with the fabric after a printing stock layer of a sheet is printed with a pattern, and accordingly, staining of a plastic film and fading of the fabric itself will not occur if the fabric is attached to a surface of the plastic film. Moreover, since no transfer paper is required, the printing device, the printing method and the printed sheet of the present disclosure are more environmentally friendly.

### BRIEF DESCRIPTION OF THE DRAWINGS

Other features and advantages of the present disclosure will be understood from the following embodiments described in detail herein and with reference to the accompanying drawings, in which like reference numerals represent the same or similar components.
Figs. 1A depicts a sheet printed with a pattern, according to one or more embodiments shown and described herein;
Fig. 1B depicts the sheet printed with a pattern of Fig. 1A, according to one or more embodiments shown and described herein;
Fig. 1C depicts another embodiment of a sheet printed with a pattern, according to one or more embodiment shown and described herein;
Fig. 1D depicts the sheet printed with a pattern of Fig. 1C, according to one or more embodiments shown and described herein;
Fig. 2A depicts a construction of a sheet printing device according, according to one or more embodiments shown and described herein;
Fig. 2B depicts a configuration of a drying assembly, according to one or more embodiments shown and described herein ;
Fig. 2C depicts a configuration of a cooling assembly, according to one or more embodiments shown and described herein;
Fig. 2D depicts another configuration of a sheet printing device, according to one or more embodiments shown and described herein;
Fig. 2E depicts a configuration of a sheet preparation device, according to one or more embodiments shown and described herein;
Fig. 2F depicts a configuration of a sheet preparation device, according to one or more embodiments shown and described herein;
Fig. 3 shows an operating principle of an ink coating apparatus, according to one or more embodiments shown and described herein;
Fig. 4A depicts an operating principle of an ink coating apparatus, according to one or more embodiments shown and described herein;
Fig. 4B depicts an operating principle of an ink coating apparatus, according to one or more embodiments shown and described herein;
Fig. 4C depicts an operating principle of an ink coating apparatus, according to one or more embodiments shown and described herein;
Fig. 4D depicts an operating principle of an ink coating apparatus, according to one or more embodiments shown and described herein;
Fig. 5A depicts an illustrative flow diagram of a sheet printing method, according to one or more embodiments shown and described herein;
Fig. 5B depicts an illustrative flow diagram of forming a printing stock layer on a fabric surface, according to one or more embodiments shown and described herein;
Fig. 5C depicts an illustrative flow diagram of forming a printing stock layer on a fabric surface, according to one or more embodiments shown and described herein;
Fig. 5D depicts an illustrative flow diagram of forming an ink layer on a printing stock layer, according to one or more embodiments shown and described herein;
Fig. 6A depicts an inflatable product, according to one or more embodiments shown and described herein; and
Fig. 6B depicts an inflatable product, according to one or more embodiments shown and described herein.

In the drawings, the same or similar reference signs represent the same or similar components.

### DETAILED DESCRIPTION

Embodiments of the present disclosure are illustrated below, and those skilled in the art may readily understand advantages and effects of the present disclosure from the content disclosed in the description. Although the description of the present disclosure will be introduced in conjunction with preferred embodiments, it does not mean that features of the present disclosure are limited to the implementations described herein. On the contrary, an objective of introducing the present disclosure in conjunction with the embodiments described herein is to encompass other options or modifications that may be extended on the basis of the claims of the present disclosure. The following description contains numerous specific details in order to provide deep understanding of the present disclosure. The present disclosure may also be implemented without these details. In addition, in order to avoid confusion of the present disclosure, some specific details will be omitted in the description. It should be noted that the embodiments and the features thereof in the present disclosure can be combined with each other without conflicts.

In the description of the present disclosure, it should be understood that orientation or position relationships indicated by terms such as "center", "longitudinal", "transverse", "length", "width", "thickness", "up", "down", "front", "rear", "left", "right", "vertical", "horizontal", "top", "bottom", "inside", "outside", "clockwise", and "anticlockwise" are based on orientation or position relationships shown in the accompanying drawings and are merely for ease of description of the present disclosure and simplification of the description, rather than indicating or implying that the apparatuses or elements referred to must have a specific orientation or be constructed and operated in a specific orientation, and therefore cannot be construed as limiting the present disclosure.

In addition, terms "first", "second", etc. are merely for the purpose of description, and should not be construed as indicating or implying the relative importance or implicitly indicating the number of technical features indicated. Thus, the features defined with "first" and "second" may explicitly or implicitly include one or more features.

In the present disclosure, unless otherwise explicitly specified and defined, terms "mounting", "connecting", "connection" and "fixing" should be understood in a broad sense, for example, they may be a fixed connection, a detachable connection, or an integrated connection, and may be a direct connection and may also be an indirect connection through an intermediate. For those of ordinary skill in the art, the specific meaning of the terms mentioned above in the present disclosure should be construed according to specific circumstances.

In the present disclosure, unless otherwise explicitly specified and defined, the first feature being "above" or "below" the second feature may include the first and second features being in direct contact, or may include the first and second features being not in direct contact but coming into contact through another feature between them. In addition, the first feature being "above", "over", and "on" the second feature includes the first feature being directly above and obliquely above the second feature, or simply means that the level of the first feature is higher than that of the second feature. The first feature being "below", "beneath", and "on underside of" the second feature includes the first feature being directly below and obliquely below the second feature, or simply means that the level of the first feature is less than that of the second feature.

In the description of the present disclosure, the meaning of "a plurality of" is two or more, unless specifically defined otherwise.

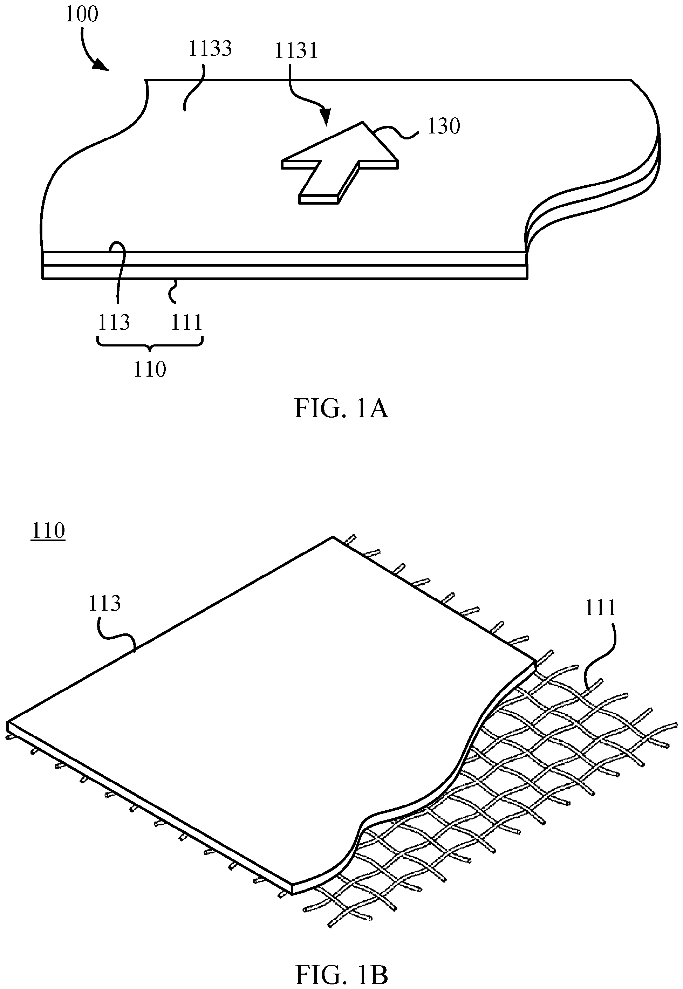

Referring to Fig. 1A, a sheet 100 is provided. The sheet 100 may include a plate-like printing substrate material 110 and an ink layer 130 printed on the printing substrate material 110. In these embodiments, the term "plate-like" may refer to a printing substrate material that has a flat, planar profile and a consistent and/or uniform thickness across a length of the material. Moreover, it should be appreciate that the term "plate-like" may similarly be used to refer to a sheet-like material, a laminated sheet structure, a flat, printable substrate, or any other similar material without departing from the scope of the present disclosure.

Referring still to Fig. 1A, the printing substrate material 110 may further include a fabric layer 111 and a printing stock layer 113. The printing stock layer 113 may be attached to one surface of the fabric layer 111, and the ink layer 130 may be attached to a surface of the printing stock layer 113. In a direction shown in Fig. 1A, for example, the printing stock layer 113 may be attached to an upper surface of the fabric layer 111, and the ink layer 130 may be attached to an upper surface of the printing stock layer 113. It can be understood that, in other embodiments, a printing stock layer 113 may also be provided on a lower surface of the fabric layer 111, and an ink layer 130 may also be attached to a surface of the printing stock layer 113.

Turning now to Fig. 1B, the fabric layer 111 may be woven from fibers. In these embodiments, the fibers which form the fabric layer 111 may be natural fibers, man-made fibers, or a mixture of natural and man-made fibers. For example, these fibers may include one or more of cotton fibers, linen fibers, silk fibers, nylon fibers, polyester fibers, polyacrylonitrile (PAN) fibers, and ultra-high molecular weight polyethylene (UHMWPE). However, it should be appreciated that a variety of natural and chemical fibers exist, and the fibers identified herein are merely exemplary in nature and are not intended to be limiting. That is, the fabric layer 111 may be formed of any fiber without departing from the scope of the present disclosure.

Furthermore, it should be understood that the structure of the fabric layer 111 in Fig. 1B is also exemplary in nature, and does not impose a limitation on the arrangement of fibers in the fabric layer 111, such that the fibers in the fabric layer 111 may be interwoven in other ways. It should be further appreciated that Fig. 1B also does not impose a limitation on a ratio between the fiber size and the pore size of the fabric layer 111.

Referring still to FIG. 1B, the printing stock layer 113 may contain a polymer compound, such that the printing stock layer 113 may be substantially formed of a polymer compound. In these embodiments, the polymer compound may include one or more of polyurethane, rubber, and acrylate. The printing stock layer 113 may be formed on a surface of the fabric layer 111 and may be bound to the fabric layer 111, and the ink layer 130 may cover a part or all of the printing stock layer 113.

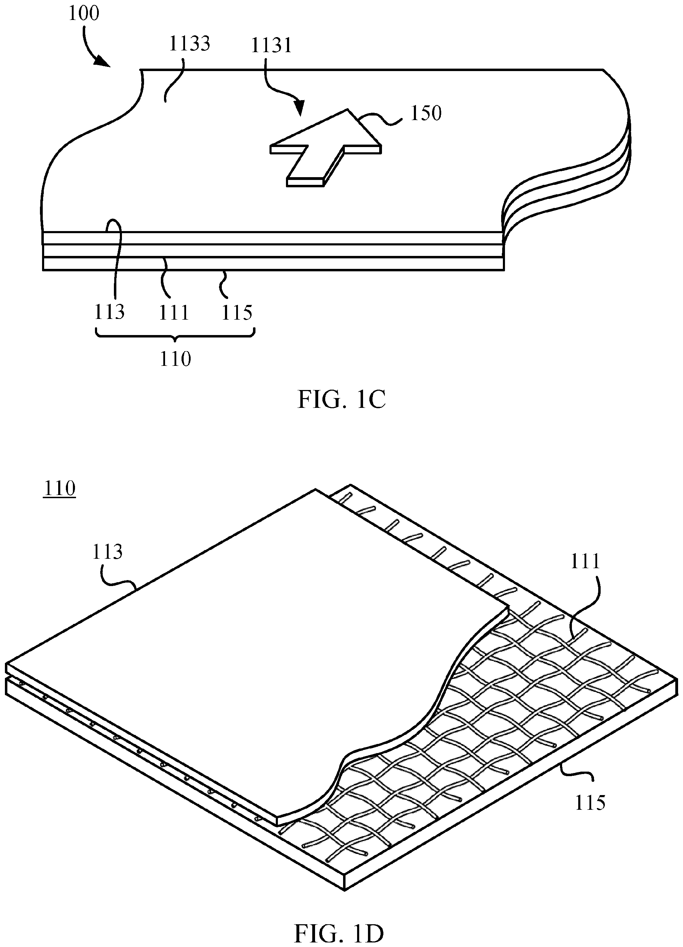

In some embodiments, such as the embodiment depicted in Fig. 1C, the ink layer 150 may cover only a first portion 1131 of the printing stock layer 113, while a second portion 1133 of the printing stock layer 113 is not covered with the ink layer 150. In contrast to embodiments in which the ink is applied directly to a fabric surface, in these embodiments, the printing stock layer 113 may reduce or avoid permeation of the ink into the other side of the fabric. For example, when a side (e.g., a side opposite of that on which the ink is applied) of the fabric is in contact with other items (e.g., plastic products or other fabric products), migration of a pigment from the ink to the other items (which is also referred to as color migration) may be avoided, thereby avoiding contaminating the other items. It should be appreciated that, in these embodiments, the bonding between the pigment and the printing stock layer 113 may be stronger than the bonding between the pigment and the fabric, such that a pattern printed on the printing stock layer 113 may be more durable than a pattern printed directly on a surface of the fabric.

In the embodiments described herein, a thickness of the printing stock layer 113 may be controlled within a certain range, such that the effect of the printing stock layer 113 on properties of the fabric layer 111 (e.g., softness and elasticity) can be minimized while color migration is avoided. For example, in some embodiments, the thickness of the printing stock layer 113 may be substantially 0.01 mm, 0.02 mm, 0.03 mm, 0.04 mm, 0.05 mm, 0.06 mm, 0.07 mm, 0.08 mm, 0.09 mm, 0.10 mm, 0.11 mm, 0.12 mm, 0.13 mm, 0.14 mm, 0.15 mm, 0.16 mm, 0.17 mm, 0.18 mm, 0.19 mm or 0.20 mm. However, it should be appreciated that the printing stock layer 113 described herein may have any thickness without departing from the scope of the present disclosure.

For the sake of simplicity, the following embodiments describe the technical solutions of the present disclosure in detail using polyurethane as an example. Those skilled in the art should be able to understand that these embodiments are also applicable to cases in which other polymer compounds are configured to form the printing stock layer 113.

Turning now to Figs. 1C and 1D, embodiments of the present disclosure will be described in detail using polyurethane as an example. However, it should be appreciated that the embodiments described herein may be similarly applicable to embodiments in which other polymer compounds are configured to form the printing stock layer 113. Accordingly, the materials provided herein are exemplary in nature, and are not intended to limit the scope of the present disclosure.

In these embodiments, the printing substrate material 110 may further include a base material layer 115. The base material layer 115 and the printing stock layer 113 may be provided on opposite sides of the fabric layer 111, respectively, such that the fabric layer 111 is sandwiched between the base material layer 115 and the printing stock layer 113.

As further depicted in Figs. 1C and 1D, the fabric layer 111 may be attached to the base material layer 115. The base material layer 115 may be made of a polymer material that can be bonded with polymer materials in other sheets. For example, base material layers 115 of two pieces of sheet 100 may be connected together by high-frequency welding or hot-melt welding.

In other embodiments, the base material layer 115 of the sheet 100 may be connected to another sheet by high-frequency welding or hot-melt welding, while the other sheet is made entirely of a weldable polymer material and contains no fabric layer 111. In this way, the sheet 100 may be configured to make products having complex shapes, and the fabric layer 111 attached to the base material layer 115 can limit deformation of the base material layer 115 when the base material layer 115 is subjected to stretching.

In some embodiments, the base material layer 115 may be made of a material suitable for high-frequency welding. For example the base material layer 115 may comprise a second polymer compound comprising polyvinyl chloride (PVC), an ethylene-vinyl acetate (EVA) copolymer, or other materials suitable for high-frequency welding. Correspondingly, in these embodiments, the sheet 100 is connectable to another sheet by high-frequency welding. In some other embodiments, the base material layer 115 may comprise a second polymer compound comprising, for example, polyethylene (PE), thermoplastic polyurethanes (TPU), or other materials suitable for hot-melt welding. Correspondingly, in these embodiments, the sheet 100 is connectable to another sheet by hot-melt welding.

It should be further appreciated that, in some embodiments, the base material layer 115 may also be made of a mixture of two or more materials. In these embodiments, the base material layer 115 may be connected to another sheet by means other than high-frequency welding and hot-melt welding. For example, in yet some other embodiments, the base material layer 115 may be connected to another sheet by gluing.

As described hereinabove, it should also be understood that the structure the fabric layer 111 in Fig. 1D is merely exemplary and is not intended to limit the arrangement of fibers in the fabric layer 111 in the present disclosure. For example the fibers in the fabric layer 111 may be interwoven in other ways without departing from the scope of the present disclosure. Moreover, Fig. 1D does not limit a ratio between the fiber size and the pore size of the fabric layer 111, as any ratio may be used without departing from the scope of the present disclosure..

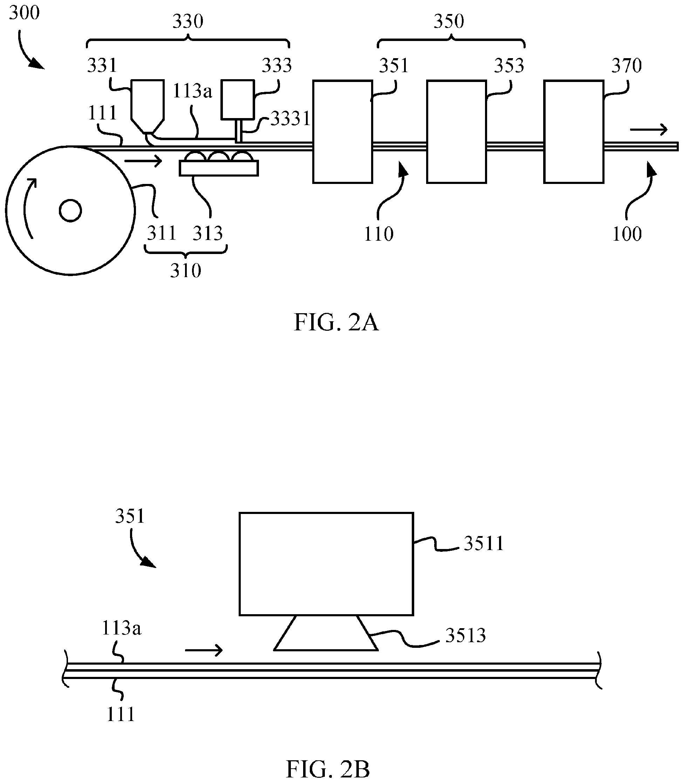

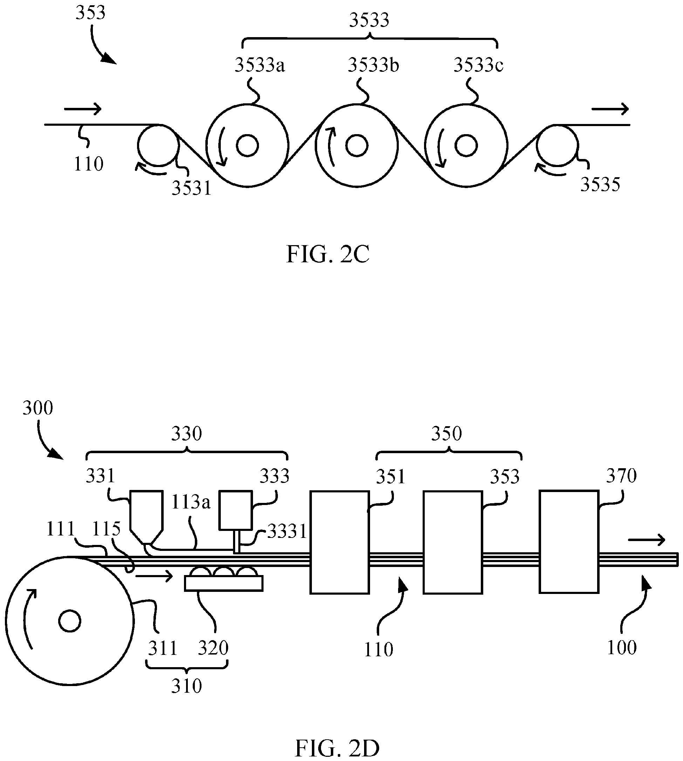

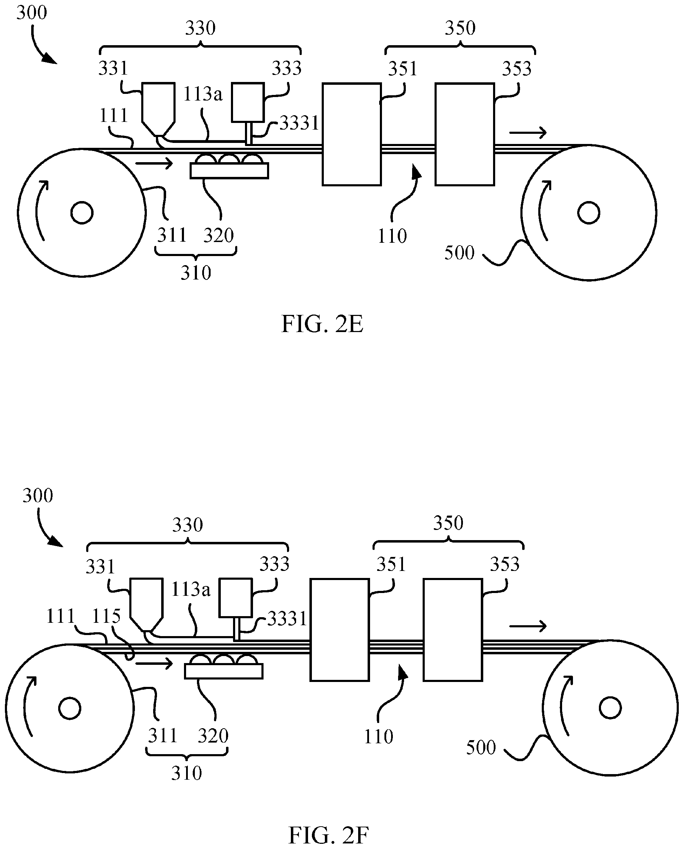

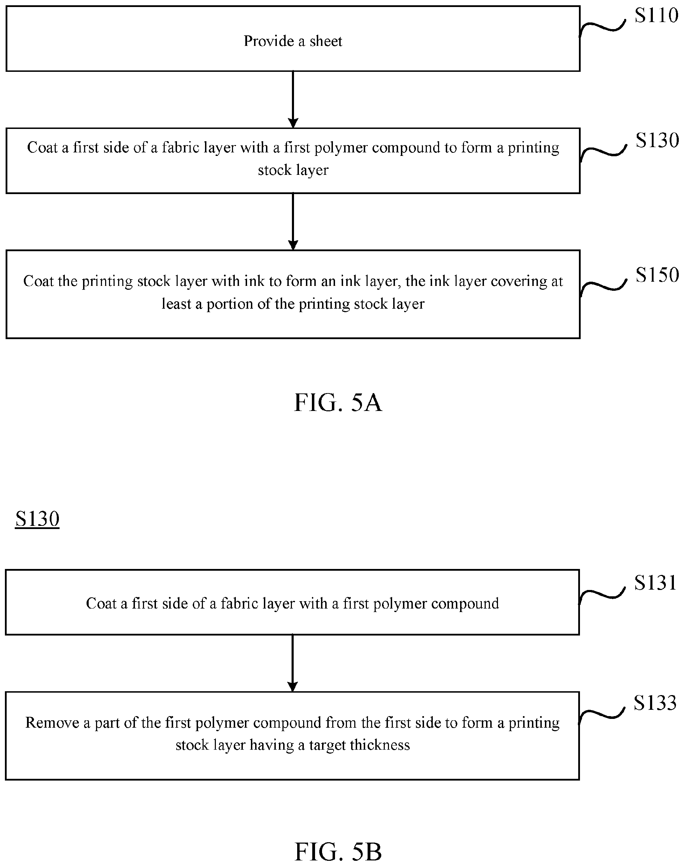

Referring now to Figs. 2A and 5A, a sheet printing device 300 for printing and manufacturing the sheet of Figs. 1A - 1D is disclosed. In these embodiments, the sheet printing device 300 may include a sheet supply apparatus 310, a printing stock layer coating apparatus 330, and an ink coating apparatus 370. The sheet supply apparatus 310, the printing stock layer coating apparatus 330, and the ink coating apparatus 370 may perform the following steps, respectively, in order to manufacture the sheet 100:

Initially, as depicted at step S110, the sheet supply apparatus 310 may provide a sheet to be printed. Once the sheet has been provided, the method may advance to step S130, which may involve coating a first side of the fabric layer in the sheet to be printed with a first polymer compound to form a printing stock layer, with the printing stock layer being formed by the printing stock layer coating apparatus 330.

Referring still to Figs. 2A and 5A, in step S150 the ink coating apparatus 370 may be used to coat the print stocking layer with ink to form an ink layer, such that the ink layer covers at least a portion of the printing stock layer. The sheet printing method provided herein will be described in detail below based on the corresponding printing device.

In the embodiments described herein, the sheet supply apparatus 310 may include an unwinder 311 and a transporting mechanism. A roll of fabric (i.e., the sheet to be printed on) may be placed on the unwinder 311 and gradually unwound. The unwound fabric may serve as the fabric layer 111 of the sheet 100 (or of the printing substrate material 110).

Referring still to Figs. 2A and 5A, in some embodiments, the sheet supply apparatus 310 may further include a conveying mechanism 313. In these embodiments, the conveying mechanism 313 may be configured to drive the fabric layer 111 and convey the fabric layer 111 to a downstream apparatus of the unwinder 311. It should be appreciated that the conveying mechanism 313 may have different structures in actual production, and components of the conveying mechanism 313 may be distributed at multiple positions of the sheet printing device. For example, a typical conveying mechanism 313 may primarily include a series of cylindrical rolls that have cylindrical surfaces in contact with the fabric layer 111, with the rolls being configured to rotate under electrical power. As these rolls rotate, friction between these rolls and the fabric layer 111 drives the fabric layer 111 to move forward.

The material fed through the sheet supply apparatus 310, as described hereinabove, may then be processed by the printing stock layer coating apparatus 330 to add the printing stock layer 113 thereto. In these embodiments, the printing stock layer coating apparatus 330 may include an extruding unit 331, with the extruding unit 331 being configured to extrude a polyurethane-containing mixture and then coat a surface of the fabric layer 111 directly with the mixture to form a mixture layer 113a. It should be appreciated that the polyurethane-containing mixture may also be coated to the surface of the fabric layer 111 by means of spraying in other embodiments.

Referring still to Figs. 2A and 5A, and as described in detail hereinabove, the mixture layer 113a may also contain other components in addition to polyurethane. For example, in some embodiments, the mixture layer 113a may further contain a solvent in which polyurethane is dispersed. By adjusting a ratio of polyurethane to solvent, the viscosity of the mixture to be coated on the surface of the fabric layer 111 may be adjusted so as to obtain the mixture layer 113a having a desired thickness. By removing the solvent from the mixture, a polyurethane coating having a desired thickness (i.e., the printing stock layer 113 on which the pattern is printed) is left on the surface of the fabric layer 111. In these embodiments, the solvent may contain at least one or more of the following components: ethyl acetate, 2-Butanone, methylbenzene, NN-dimethyl formamide (DMF) or other organic solvents.

In some embodiment, before the solvent is removed, if the mixture layer 113a is thicker than the desired thickness, a part of a polyurethane solution may be removed to reduce the thickness of the mixture layer 113a.

Referring now to Fig. 5B, reference step S130, as described hereinabove, may further include sub-steps S131 and S133. For example, in the sub-step S131, a first side of the fabric layer may be coated with a first polymer compound using the printing stock layer coating apparatus 330. Furthermore, in the sub-step S133, a part of the first polymer compound may be removed from the first side to form a printing stock layer 113 having a target thickness via the printing stock layer coating apparatus 330.

Referring again to Fig. 2A, the printing stock layer coating apparatus 330 may further include a scraping assembly 333. In these embodiments, the scraping assembly 333 may include a doctor-blade 3331, with a lower edge of the doctor-blade 3331 being in contact with the mixture layer 113a. As provided herein, the term "doctor-blade" may refer to a tool that is used in printing, coating, and material processing to control a thickness of the mixture layer 113a, or any other similar layer. For example, the doctor-blade 3331 may remove excess ink from the surface of the printing cylinder, regulate the thickness of material applied to a substrate, remove excess polymer material of the printing stock layer, or provide any other similar function without departing from the scope of the present disclosure.

For example, as the fabric layer 111 together with the mixture layer 113a moves relative to the doctor-blade 3331, a part of the polyurethane solution may be blocked by the doctor-blade 3331 and removed from the mixture layer 113a, so that the mixture layer 113a is thinned. In these embodiments, the lower edge of the doctor-blade 3331 may be parallel to the mixture layer 113a such that the mixture layer 113a has a flat surface. By adjusting a gap between the lower edge of the doctor-blade 3331 and the fabric layer 111, the mixture layer 113a may be controlled to have a desired thickness.

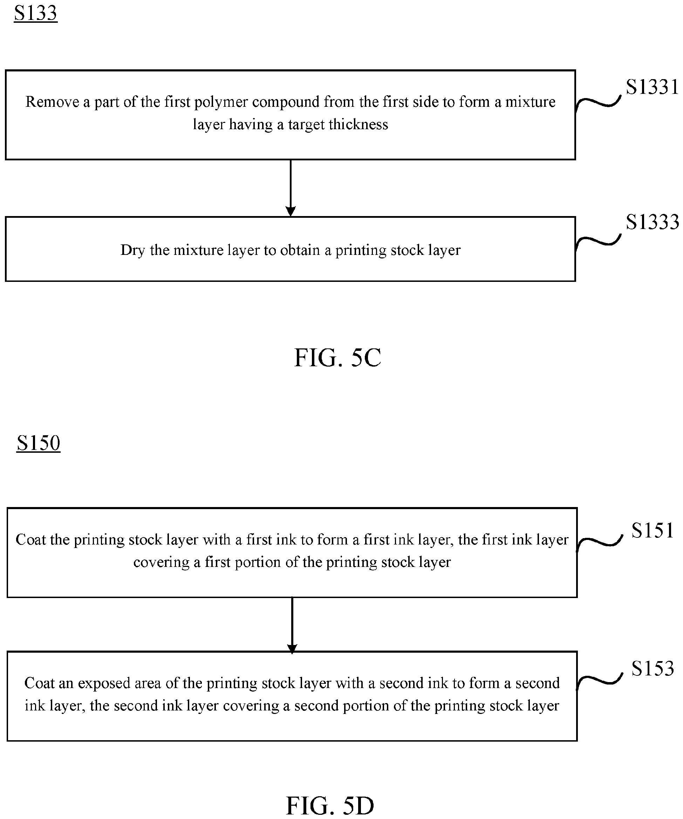

In some embodiments, the solvent may be removed from the mixture by heat drying. For example, as depicted most clearly in FIG. 5C, the above sub-step S133 may further include sub-steps S1331 and S1333. In sub-step S1331, a part of the first polymer compound is removed from the first side to form a mixture layer having a target thickness using the printing stock layer coating apparatus 330. In sub-step S1333, the printing stock layer coating apparatus 330 dries the mixture layer 113a to obtain a printing stock layer 113.

It should be appreciated that drying the mixture layer 113a by heating may improve the efficiency of preparing the printing substrate material 110 as compared with the way of natural evaporation of the solvent described above. Accordingly, as provided in Fig. 2A, the printing stock layer coating apparatus 300 described above may also include a heat drying apparatus 350. After the fabric layer 111 with the mixture layer 113a is dried by means of the heat drying apparatus 350, the solvent in the mixture layer 113a may be removed by evaporation, while polyurethane in the mixture layer 113a remains on the surface of the fabric layer 111 to form the printing stock layer 113.

Referring again to Figs. 2A and 2B, the heat drying apparatus 350 may include a heat drying assembly 351 having a hot air generator 3511, and the hot air generator 3511 configured to heat air to generate hot air. In these embodiments, the heat drying assembly 351 may further include one or more nozzles 3513. The one or more nozzles 3513 may be configured to deliver the hot air to the surface of the mixture layer 113a.

In the embodiments described herein, it should be appreciated that a heated air stream may accelerate evaporation of the solvent, such that the printing substrate material 110 may be obtained after the printing stock layer 113 is formed on the surface of the fabric layer 111. Furthermore, in other embodiments, it should be understood that the heat drying apparatus 350 may include a series of heated rolls through which the fabric layer 111 with the mixture layer 113a is sequentially heated, such that the solvent in the mixture layer 113a is removed by evaporation.

Referring still to Figs. 2A and 2B, the printing substrate material 110 heated by the heat drying assembly 351 may reach a high temperature. However, it should be understood that a high-quality printed pattern may not be directly and efficiently formed on the surface of the printing stock layer 113 when the temperature of said printing stock layer 113 is too high. Therefore, the printing substrate material 110 may be cooled before the pattern is printed on the printing stock layer 113. In addition to naturally cooling the printing substrate material 110, a cooling device may be provided to rapidly cool the printing substrate material 110, thus improving the production efficiency.

Referring now to Figs. 2A and 2C, the heat drying apparatus 350 may further include a cooling assembly 353 having at least one cooling roll. For example, in the embodiment shown in Fig. 2C, the cooling assembly 353 may include a cooling roll set, with the cooling roll set including a plurality of cooling rolls, such as three cooling rolls 3533a, 3533b and 3533c arranged side by side. In these embodiments, a coolant is fed to each of the cooling rolls and circulated. A driving device (not shown) may drive the printing substrate material 110 to make contact with surfaces of the cooling rolls 3533a, 3533b and 3533c in sequence, and the heat of the printing substrate material 110 may be transferred away from the printing substrate material 110 by the cooling rolls 3533a, 3533b and 3533c in sequence, such that the temperature of the printing substrate material 110 is gradually reduced to a target temperature. The heat obtained by the cooling rolls 3533a, 3533b and 3533c may then be taken away by the coolant, such that the cooling assembly 353 may operate continuously without interruption. It should be understood that, although the cooling roll set 3533 is depicted as including three cooling rolls, the cooling roll set 3533 may include any number of cooling rolls without departing from the scope of the present disclosure.

Referring now to Fig. 2A, the ink coating apparatus 370 may coat the printing stock layer 113 with ink to form the printed pattern. That is, after the printing substrate material 110 passes through the ink coating apparatus 370, the printed sheet 100 may be obtained.

In other embodiments the ink coating apparatus 370 may include an ink supply assembly and an ink transfer assembly. The ink supply assembly may be configured to store a certain amount of ink and supply ink to the ink transfer assembly. The ink transfer assembly may be configured to transfer the ink from the ink supply assembly to the surface of the printing stock layer 113 to form a desired pattern on the printing stock layer 113.

In each of the embodiments described herein, the ink may contain a pigment and a volatile solvent. After the ink is applied, the solvent volatilizes and the pigment remains on a surface of a substrate. The ink may further include other components such as resin, filler, and/or anti-adhesive agent to improve the performance of the ink.

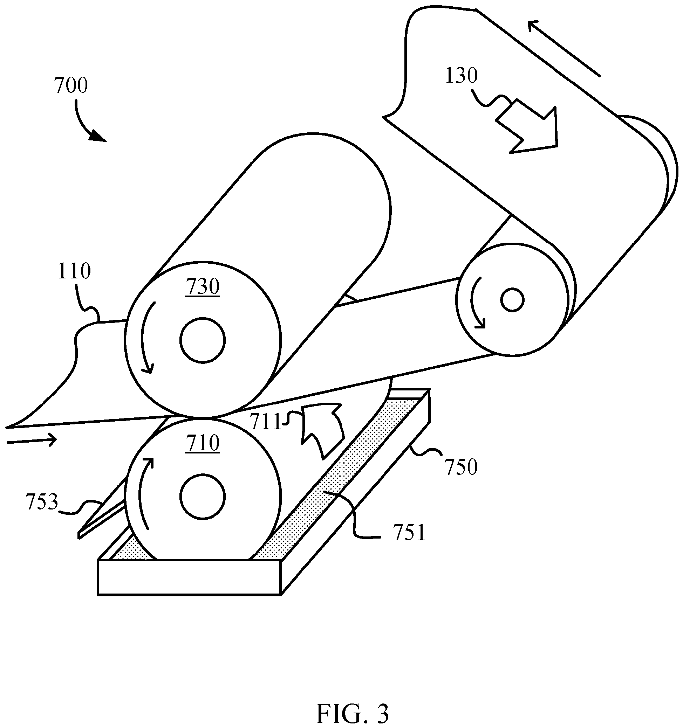

Turning now to Fig. 3, in some embodiments, the pattern described herein may be formed on the printing stock layer 113 by means of a rotogravure printing apparatus 700. That is, in some embodiments, the ink coating apparatus 370 may include the rotogravure printing apparatus 700.

In these embodiments, as illustrated in Fig. 3, the ink transfer assembly may include gravure cylinder 710 and an impression roll 730. The gravure cylinder 710 and the impression roll 730 may clamp the printing substrate material 110. The gravure cylinder 710 may include a surface made of a metal material (e.g., steel), and the impression roll 730 may include a surface made of a softer material (e.g., rubber) relative to the gravure cylinder 710. The surface of the gravure cylinder 710 may be smooth and include etched recesses 711, such that ink may be stored in each of the etched recesses 711. It should be appreciated that, in these embodiments, the shape of each of the etched recesses 711 may correspond to the pattern desired to be printed on the printing substrate material 110, and the color of the ink in the etched recess 711 corresponds to the color of the pattern.

Referring still to Fig. 3, in operation, the impression roll 730 may press against the printing substrate material 110 in a direction toward the gravure cylinder 710, such that the gravure cylinder 710 and the printing stock layer 113 are forced into full contact with one another. As the gravure cylinder 710 and the printing stock layer 113 are moved into contact, a portion 1131, corresponding to the pattern, of the printing stock layer 113 (e.g., as depicted in Fig. 1A and Fig. 1C) may be in contact with the ink, such that the ink layer 130 is formed on the surface of the printing stock layer 113. As the gravure cylinder 710 and the impression roll 730 continuously rotate, a plurality of ink layers 130 may be formed on the surface of the printing stock layer 113 sequentially and continuously.

It should be appreciated that continuous printing on the surface of the printing stock layer 113 may require that ink is continuously supplied to the etched recesses 711. To this extent, the ink supply assembly is provided to supply ink to the gravure cylinder 710. For example, in these embodiments, the ink supply assembly may include an ink fountain 750 and a doctor-blade 753. The ink fountain 750 is configured to contain ink 751 to be coated on the surface of the printing stock layer 113, and the lower portion of the gravure cylinder 710 may be immersed in the ink 751 during use of the device. As the gravure cylinder 710 rotates, the ink 751 may fill into the etched recesses 711. The doctor-blade 753, which may be in close contact with the surface of the gravure cylinder 710, may then scrape the ink off the surface of the gravure cylinder 710 at the position outside the range of the etched recesses 711, which prevents excess ink from contaminating the second portion 1133 on the printing stock layer 113 (e.g., as depicted in Figs. 1A and 1C).

Turning now to Fig. 5D, it should be appreciated that, in some embodiment, step S150 described hereinabove may further include sub-steps S151 and S153. In sub-step S151, the printing stock layer is coated with a first ink by the rotogravure printing apparatus 700 to form a first ink layer, such that the first ink layer covers a first portion of the printing stock layer. In sub-step S153, the printing stock layer is coated with a second ink by the rotogravure printing apparatus 700 to form a second ink layer, such that the second ink layer covers a second portion of the printing stock layer.

In these embodiments,, the rotogravure printing apparatus 700 may be provided with a plurality of gravure cylinders 710. The printing substrate material 110 may pass through these gravure cylinders 710 sequentially. In this way, by means of the plurality of gravure cylinders 710, different patterns can be printed at different portions of the printing stock layer 113. For example, patterns having different colors may be printed at different portions of the printing stock layer by using the plurality of gravure cylinders 710 described herein. In these embodiments, the different portions may not overlap each other, or may overlap partially or completely. Furthermore, it should be appreciated that a plurality of impression rolls 730, ink fountains 750, and doctor-blades 753 may be provided corresponding to the plurality of gravure cylinders 710.

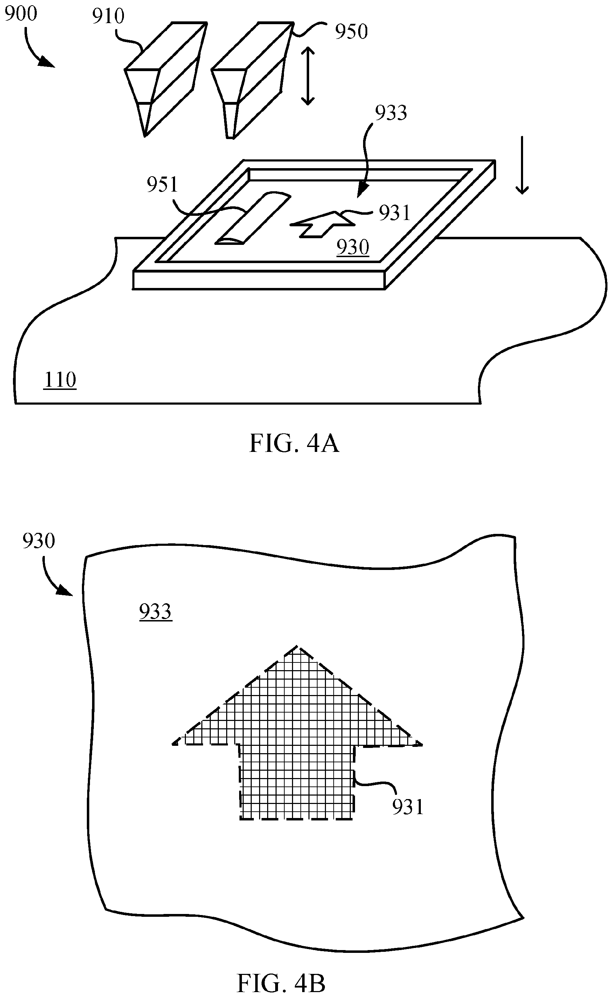

Turning now to Figs. 4A and 4B, in some embodiments, the pattern described herein may be formed on the printing stock layer 113 by means of a screen printing apparatus 900. That is, in some embodiments, the ink coating apparatus 370 may include the screen printing apparatus 900. In these embodiments, the ink transfer assembly may include a squeegee 910 and a mesh screen 930. The mesh screen 930 may include a first area 931 and a second area 933. The first area 931 and the second area 933 may be configured such that ink can penetrate meshes in the first area 931, but cannot penetrate meshes in the second area 933 because said meshes in the second area 933 are blocked. In other words, the first area 931 is or comprises an ink-permeable area and the second area 933 is or comprises an ink-impermeable area. The ink supply assembly may also include an ink extruding unit 950.

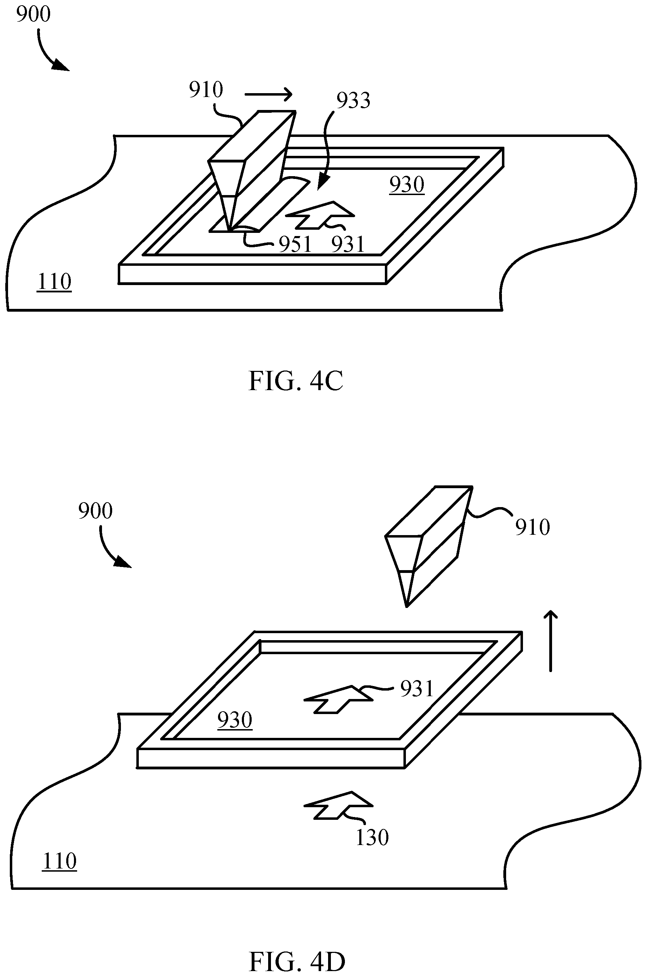

In a printing process, the mesh screen 930 may be first disposed on the surface of the printing stock layer 113. The ink extruding unit 950 may then apply ink 951 onto the second area 933 of the mesh screen 930. Subsequently, as illustrated most clearly in Figs. 4C and 4D, the squeegee 910 may press against the mesh screen 930 and move along the mesh screen 930. As the squeegee 910 moves across the mesh screen 930, the ink 951 penetrates the meshes in the first area 931 under the pressure of the squeegee 910 to make contact with the printing stock layer 113. The squeegee 910 and the mesh screen 930 are then removed, and the ink 951 in contact with the printing stock layer 113 remains on the surface of the printing stock layer 113 to form the ink layer 130. Generally, the squeegee 910 may have any suitable size, and the squeegee 910 may be moved once to completely cover the first area 931, thus leaving the desired complete pattern on the printing stock layer 113.

In an embodiment, the second area 933 may be formed by photocuring. Specifically, a mesh screen 930 with a suitable mesh size is selected, and the mesh screen 930 is coated with a photosensory emulsion such that the photosensory emulsion covers all the meshes of the mesh screen 930. After the position of a pattern to be printed on the mesh screen 930 is determined, the portion outside the pattern is exposed to a specific light ray in order to expose and harden the photosensory emulsion on this portion (e.g., a portion corresponding to the second area 933), and the unexposed photosensory emulsion will not be hardened during this process. Finally, the unexposed photosensory emulsion is washed away. The hardened photosensory emulsion remains on the mesh screen 930. It should also be appreciated that, in other embodiments, the pattern may be left on the mesh screen 930 by means other than photocuring.

Referring now to Fig. 5D, step S150 described hereinabove may also include sub-steps S151 and S153. In sub-step S151, the printing stock layer may be coated with a first ink to form a first ink layer using the screen printing apparatus 900, such that the first ink layer covers a first portion of the printing stock layer. In sub-step S153, the printing stock layer is coated with a second ink to form a second ink layer using the screen printing apparatus 900, such that the second ink layer covers a second portion of the printing stock layer.

In the embodiments described herein, the screen printing apparatus 900 may be provided with a plurality of mesh screens 930. In accordance with the printing method described above, different patterns can be printed at different portions of the printing stock layer 113 by applying the mesh screens 930 in sequence. For example, utilizing the screen printing apparatus described herein may allow for the formation of patterns having different colors. These different portions may not overlap each other, or may overlap partially or completely. It should be appreciated that a plurality of ink extruding units 950 and squeegees 910 may also be provided corresponding to the plurality of mesh screens 930.

The above describes a method of forming the ink layer 130 on the printing stock layer 113 by rotogravure printing and screen printing. However, it should be appreciated that the ink layer 130 may be formed on the printing stock layer 113 by other means. For example, in some embodiments, ink is sprayed onto the printing stock layer 113 via a nozzle to form the ink layer 130.

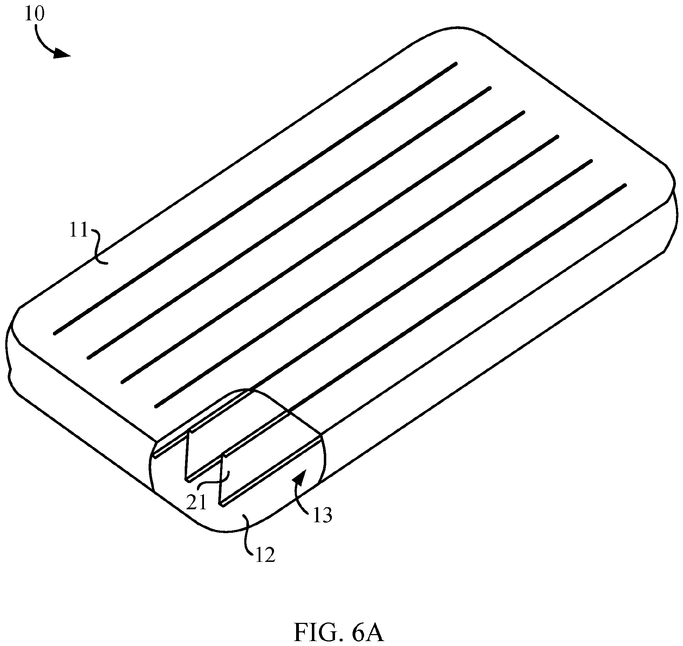

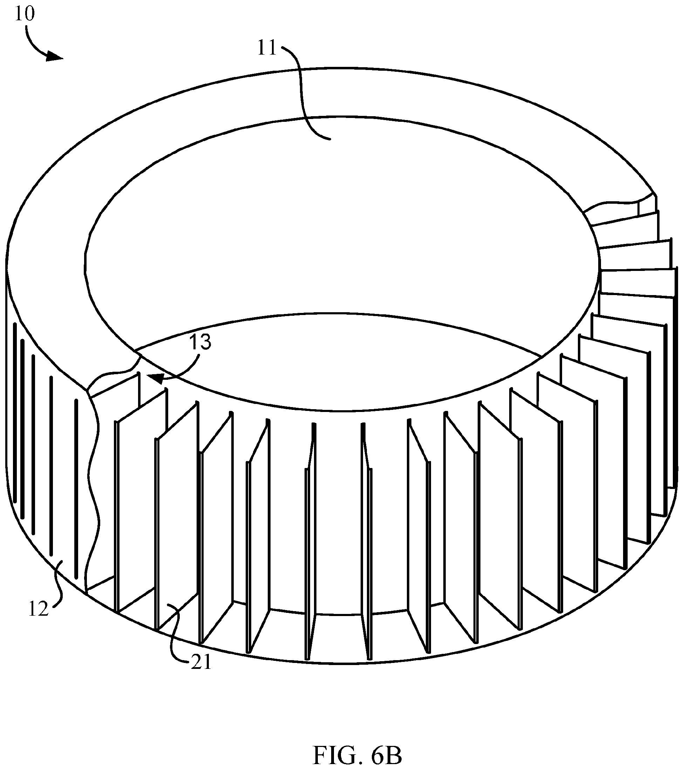

The printed sheet 100 described above can be widely used in various applications beyond those described in the present disclosure. Accordingly, it should be appreciated that the embodiments described herein are exemplary in nature, and are not intended to limit the scope of the present disclosure. For example, in addition to the embodiments described hereinabove the sheet 100 may be configured to manufacture an inflatable product 10 and, in general, the inflatable product 10 may comprise at least one wall that defines an inflatable chamber and said at least one wall comprises a printed sheet 100. For example, the inflatable product may be an inflatable bed shown in Fig. 6A or an inflatable pool shown in Fig. 6B. For example, in the embodiments depicted in Figs. 6A and 6B, the inflatable product 10 may include at least one first wall 11, a second wall 12, and an inflatable chamber 13 defined by the first wall 11 and the second wall 12 and configured to be inflated, and after the pressure of gas (e.g., air) in the inflatable chamber 13 reaches a desired value, the inflatable product 10 is in an inflated state and maintains a preset shape. After the gas in the inflatable chamber 13 is discharged, the inflatable product 10 is in a deflated state, and the volume of the inflatable product 10 is greatly reduced relative to the volume thereof in the inflated state, thereby facilitating the storage of the inflatable product 10.

A plurality of tensioning members 21 may also be provided in the inflatable chamber 13 of the inflatable product 10, and the tensioning members 21 may be connected to the at least one wall. According to the embodiments depicted in Fig. 6A and Fig. 6B, the tensioning members 21 are connected to the first wall 11 and the second wall 12, fox example by high-frequency welding, hot melting, adhesive bonding or other connection methods. The tensioning members 21, after being tensioned, provide a tensile force to the first wall 11 and the second wall 12 to limit the deformation of the inflatable product 10, so that the inflatable product 10 remains in the preset shape after being inflated.

The foregoing descriptions are only embodiments of the present disclosure and are not intended to limit the present disclosure. For those skilled in the art, various changes and variations can be made to the present disclosure. Any modifications, equivalent replacements, and improvements made without departing from the spirit and principle of the present disclosure shall fall within the scope of the claims of the present disclosure.

Furthermore, it should be apparent that the present disclosure is not limited to the details of the above-mentioned exemplary embodiments, and the present disclosure can be implemented in other specific forms without departing from the spirit or basic features of the present disclosure. Therefore, no matter from which point of view, the embodiments should all be regarded as exemplary and non-limiting. The scope of the present disclosure is defined by the appended claims rather than the above-mentioned description, and therefore it is intended that all changes which fall within the meaning and range of equivalents of the claims are embraced in the present disclosure. Any reference signs in the claims should not be construed as limiting the claims involved. In addition, it is apparent that the word "comprise/include" does not exclude other elements or steps, and the singular does not exclude the plural. The terms first, second, etc. are used for designations and do not represent any particular order.

It should be understood that the embodiments as shown in the drawings only show the optional shapes, sizes and arrangements of optional components of the air valve and inflatable products according to the present disclosure, which are merely illustrative but not restrictive, and other shapes, sizes and arrangements may be employed without departing from the idea and scope of the present disclosure.

The technical contents and technical features of the present disclosure are disclosed above, but it can be understood that those skilled in the art would have made various variations and improvements to the concepts disclosed above under the creative idea of the present disclosure, and all the variations and improvements fall into the scope of protection of the present disclosure. The descriptions of the above embodiments are illustrative but not restrictive, and the scope of protection of the present disclosure is determined by the claims.

## Claims

1. A sheet (100), comprising:
a fabric layer (111) comprising a first side and a second side;
a printing stock layer (113) comprising a first polymer compound, the printing stock layer (113) being formed on the first side of the fabric layer (111); and
an ink layer (130, 150) covering at least a portion of the printing stock layer (113).

2. The sheet (100) according to claim 1, wherein the first polymer compound comprises at least one of polyurethane, rubber and acrylate.

3. The sheet (100) according to claim 1, wherein the printing stock layer (113) has a thickness of not greater than 0.20 mm.

4. The sheet (100) according to claim 1, further comprising a base material layer (115), the base material layer (115) comprising a second polymer compound and being attached to the second side of the fabric layer (111).

5. A sheet (100) printing method comprising:
Providing (S110) a sheet (100), the sheet (100) comprising a fabric layer (111), the fabric layer (111) comprising a first side and a second side;
Coating (S130) the first side of the fabric layer with a first polymer compound to form a printing stock layer (113); and
Coating (S150) the printing stock layer (113) with an ink to form an ink layer (130, 150), the ink layer (130, 150) covering at least a portion of the printing stock layer (113).

6. The method according to claim 5, wherein the step of coating (S130) the first side of the fabric layer (111) with a first polymer compound to form a printing stock layer (113) comprises:
Coating (S131) the first side of the fabric layer (111) with a first polymer compound; and
Removing (S133) a part of the first polymer compound from the first side to form a printing stock layer (113) having a target thickness.

7. The method according to claim 6, wherein the step of removing (S133) a part of the first polymer compound from the first side to form a printing stock layer (113) having a target thickness comprises:
removing (S1331) a part of the first polymer compound from the first side to form a mixture layer having a target thickness;
drying (S1333) the mixture layer to form the printing stock layer (113).

8. The method according to claim 5, wherein the sheet (100) further comprises a base material layer (115), and the base material layer (115) comprises a second polymer compound and is attached to the second side of the fabric layer (111).

9. A sheet printing device (300), comprising:
a sheet supply apparatus (310) configured to provide a sheet (100) to be printed with a pattern, the sheet (100) comprising a fabric, and the fabric comprising a first side and a second side;
a printing stock layer coating apparatus (330) configured to form a printing stock layer (113) on the first side of the fabric and comprising an extruding assembly (331) for extruding a first polymer compound to the first side of the sheet (100); and
an ink coating apparatus (370) comprising an ink supply assembly and an ink transfer assembly, the ink transfer assembly being configured to coat a surface of the printing stock layer (113) with ink from the ink supply assembly;
wherein the printing stock layer (113) is formed from the first polymer compound and on the first side of the sheet (100).

10. The sheet printing device (300) according to claim 9, wherein the printing stock layer coating apparatus (330) further comprises:
a scraping assembly (333) configured to remove a part of the first polymer compound from the first side of the sheet (100) to form on the first side of the sheet (100) a printing stock layer (113) having a target thickness.

11. The sheet printing device (300) according to claim 9, wherein the sheet (100) printing device further comprises:
a heat drying apparatus (350) disposed upstream of the ink coating apparatus (370) and configured to dry the printing stock layer (113) by heating.

12. The sheet printing device (300) according to claim 9, wherein the ink transfer assembly comprises:
a mesh screen (930) comprising an ink-permeable area (931) and an ink-impermeable (933) area; and
a squeegee )910) configured to squeeze ink to penetrate the ink-permeable area (931) to coat the surface of the printing stock layer (113) with the ink.

13. The sheet printing device (300) according to claim 9, wherein the ink transfer assembly comprises:
a gravure cylinder (710) comprising an etched recess (711) configured to store ink, the gravure cylinder (710) facing toward the first side of the fabric; and
an impression roll (730) that presses against the sheet (100) in a direction from the second side of the fabric to the gravure cylinder (710).

14. An inflatable product (10), comprising:
at least one wall (11, 12) that defines an inflatable chamber (13) and comprises:
a fabric layer (111), comprising a first side and a second side;
a printing stock layer (113), comprising a first polymer compound and being formed on the first side of the fabric layer (111); and
an ink layer (130, 150), covering at least a portion of the printing stock layer (113).

15. The inflatable product (10) according to claim 14, wherein the at least one wall (11, 12) further comprises a base material layer (115), and the base material layer (115) comprises a second polymer compound and is attached to the second side of the fabric layer (111).
